# EUROPÄISCHE PATENTANMELDUNG

(11) **EP 1 873 176 A1**
(43) Veröffentlichungstag der Anmeldung: **02.01.2008**
(21) Anmeldenummer: 07011371.7
(22) Anmeldetag: 11.06.2007
(51) Int. Cl.: C08G 12/40, C08L 61/32, C14C 3/20, D06M 15/429

(54) **Säuregruppenhaltige dialdehyd Kondensationsprodukte**

(30) Priorität: 23.06.2006 DE 102006029408
(71) Anmelder: LANXESS Deutschland GmbH, 51369 Leverkusen (DE)
(72) Erfinder: Brinkmann, Nils, Dr., 24030 Valbrembo (IT); Kleban, Martin, Dr., 51381 Leverkusen (DE); Lammich, Karl-Heinz, Dr., 51061 Köln (DE)

(57) **Zusammenfassung**

Säuregruppen-enthaltene Kondensationsprodukte auf Basis von
a) Aldehyden, wobei der Aldehyd ausgewählt ist aus der Gruppe Di-Aldehyde aus der Gruppe der C₂-C₁₂-Di-Aldehyde und
b) wenigstens einer NH₂-Gruppen tragende Verbindung

wobei als Säuregruppe Sulfon- und/oder Carbonsäuregruppen sowie deren Salze verstanden werden.

## Beschreibung

Die Erfindung betrifft Säuregruppen-haltige Dialdehyd-Kondensate und deren Salze, Verfahren zu deren Herstellung, ihre Verwendung als Lederhilfsmittel, insbesondere als Gerb- und Nachgerbstoffe, sowie die damit gegerbten und nachgegerbten Leder und Pelze.

Die Herstellung von Leder und Pelzen aus Häuten und Fellen verläuft in der Regel in mehreren Schritten. Nach den vorbereitenden Schritten der Wasserwerkstatt, wie Enthaaren, Entfleischen, Entkälken und Beizen besteht eine typische Abfolge aus Gerbung, Nachgerbung, Färbung, Fettung und Zurichtung. Die einzelnen Arbeitsschritte lassen sich dabei noch in weitere Untereinheiten aufteilen.

Während die Gerbung zu einer Erhöhung der Schrumpftemperatur des Leders führt, hat die Nachgerbung darauf kaum Einfluss. Unter Nachgerbung versteht man die Nachbehandlung von vorgegerbtem, oft chromgegerbtem Leder, um Farbe, Egalität, Weichheit, Fülle sowie das Verhalten gegen Wasser (Hydrophobie) zu optimieren und Gerbstoffe zu fixieren. Besonders die Gerbung, Nachgerbung und Färbung werden dabei gewöhnlich in verschiedenen sogenannten Gerbfässern unter Verwendung wässriger Gerbstoff-/Nachgerbstoff-Lösungen oder -Dispersionen respektive Farbstoff lösungen durchgeführt.

Kondensationsprodukte als Nachgerbstoffe für Leder sind beispielsweise bereits in US-A-3 063 781, EP-A-63 319, DE-A-19 823 155, US-A-4 656 059, WO94/10231, GB-A-2 371 559 und DE-A-4 436 182 beschrieben.

EP-A 063 319 beschreibt ein Verfahren zur Herstellung von wasserlöslichen Harzgerbstoffen aus Melamin, Harnstoff, Formaldehyd und Natriumhydrogensulfit als Nachgerbstoff für Leder.

Diese Kondensationsprodukte weisen aber noch Nachteile bei den damit nachgegerbten Ledern auf, insbesondere in der Fülle, Weichheit, Narbenwurf, Griff, Festnarbigkeit, Färbbarkeit.

Überraschenderweise besitzen die erfindungsgemäßen Kondensationsprodukte ein deutlich verbessertes Eigenschaftsbild, insbesondere ist eine verbesserte Festnarbigkeit, Fülle, Färbbarkeit, und Griff festzustellen.

Gleichzeitig zeichnen sich die mit dem erfindungsgemäßen Kondensat behandelten Leder durch Formaldehydfreiheit nach DIN 53 315 aus, ein Vorteil der ebenfalls als sehr positiv zu verbuchen ist.

Überraschenderweise wurden nun Säuregruppen-enthaltene Kondensationsprodukte auf Basis von
- a): Aldehyden, wobei der Aldehyd ausgewählt aus der Gruppe der Di-aldehyde der Gruppe C₂ bis C₁₂ ist, und
- b): wenigstens einer NH₂-Gruppen tragenden Verbindung,
wobei als Säuregruppe Sulfon- und/oder Carbonsäuregruppen sowie deren Salze verstanden werden, gefunden.

"Auf Basis von" bedeutet, dass das Kondensationsprodukt gegebenenfalls aus weiteren Reaktanden neben a), b) und gegebenenfalls c) und Säuregruppen-einführenden Reaktanden hergestellt wird.

Die jeweiligen Gruppen a) und b) sind jedoch abschließend hinsichtlich der verwendeten Aldehyde bzw. NH₂-Gruppen tragenden Verbindungen. Das heißt kein anderer Aldehyd, insbesondere kein Mono-Aldehyd wird als Aufkomponente eingesetzt, soweit er nicht der Definition von a) genügt. Zur Klarstellung sei erwähnt, dass beispielsweise Formaldehyd - da C₁-Mono-Aldehyd - als Reaktand für die erfindungsgemäßen Kondensate nicht in Frage kommt. Bevorzugte erfindungsgemäße Kondensationsprodukte werden zu mehr als 95 Gew.-%, insbesondere zu mehr als 99 Gew.-% aus den Komponenten a), b), c) und Reaktanden zur Einführung der Säuregruppen aufgebaut.

Als Dialdehyde der Komponente a) kommen sowohl aliphatische als auch aromatische C₂-C₁₂-Dialdehyde in Frage. Bevorzugt sind aliphatische, insbesondere C₂-C₈-Dialdehyde. Besonders bevorzugt wird als Dialdehyd der Komponente a) eine oder mehrere Verbindungen aus der Gruppe Glyoxal, Butandialdehyd, Butendialdehyd, Glutardialdehyd, Adipaldehyd und Octandialdehyd.

Besonders bevorzugt ist Glutardialdehyd.

Als NH₂-Gruppen enthaltene Verbindungen der Komponente b) kommen insbesondere primäre Amine sowie Amide in Frage. Bevorzugt sind dies aliphatische oder aromatische C₁-C₁₀-Amine und/oder -Amide. Besonders bevorzugt wird Cyanamid, Harnstoff, Melamin, Urotropin, Guanidin, Formoguanamin, Benzoguanamin, Acetoguanamin, Caprinoguanamin, Isobutyroguanamin, Acrylamid, Benzamid, Dicyandiamid (Cyanoguanidin) oder Mischungen daraus eingesetzt.

Bevorzugt wird Melamin oder Melamin in Kombination mit Harnstoff eingesetzt.

Die erfindungsgemäßen Kondensationsprodukte tragen Sulfonsäure- und/oder Carbonsäuregruppen oder deren Salze.

Bevorzugte Salze sind Alkali-, Erdalkali- oder Ammoniumsalze, besonders bevorzugt in Form ihrer Natrium- oder Kalium-Salze.

Bevorzugte Säuregruppen sind Sulfonsäuregruppen oder ihre Salze.

Als Reaktanden zur Einführung der Säuregruppen insbesondere der Sulfonsäuregruppen kommen beispielsweise konzentrierte Schwefelsäure, Oleum, Chlorsulfonsäure, Alkali-, Erdalkali- oder Ammoniumdisulfit, Alkali-, Erdalkali- oder Ammoniumhydrogensulfit, Alkali-, Erdalkali- oder Ammoniumsulfamat oder Mischungen dieser Reaktanden in Frage.

Zur Einführung der Carbonsäuregruppen kommen beispielsweise Oxidationen von Alkylgruppen, Alkengruppen, Aldehydgruppen oder Alkoholgruppen, die Hydrolyse von Amiden, Estern oder Carbonsäurechloriden, der Einbau von Carbonsäure-tragenden Verbindungen oder der Einbau von Carbonsäurechlorid-tragenden, Ester-tragenden oder Amid-tragenden Verbindungen und deren nachfolgende Hydrolyse in Frage.

Bei der Einführung der Säuregruppen werden insbesondere die aus der Reaktion der Amine mit den Aldehyden generierten OH-Gruppen in Säuregruppen, insbesondere in Sulfonsäuregruppen umgewandelt.

Als bevorzugte gegebenenfalls mit zuverwendenden Komponente c) werden ein oder mehrere aliphatische oder aromatische Alkohole als weitere Aufbaukomponenten mit eingesetzt. Bevorzugt sind dabei beispielsweise Methanol, Ethanol, Propanol, Ethandiol, Diethanolamin, Glycerin, Triethanolamin und Phenol.

Besonders bevorzugt sind Ethanol, Ethandiol, Diethanolamin, Glycerin, Triethanolamin und Phenol.

Bevorzugt beträgt die Menge an Säuregruppen 40 bis 180 mol%, bezogen auf die Summe der Stoffmenge an eingesetztem Dialdehyd a).

Bevorzugt ist es, die Komponenten a) und b) in folgendem Mengenverhältnis einzusetzen:
- a): 10 bis 90 Gew.-%,
- b): 10 bis 90 Gew.-% und
wobei die Prozentzahlen von a) und b) sich zu 100 % ergänzen.

Die erfindungsgemäßen Verbindungen weisen vorzugsweise ein mittleres Molekulargewicht von 500 bis 50.000 g/mol auf, insbesondere von 2.000 bis 15.000 g/mol, und weisen vorzugsweise eine rückstandslose Wasserlöslichkeit oder Wasseremulgierbarkeit bei 20°C von mehr als 50 g/l auf.

Die Kondensate können als Feststoffe beispielsweise als Pulver oder Granulat oder als wässrige Lösungen oder Dispersionen eingesetzt werden.

Die Erfindung betrifft weiterhin ein Verfahren zur Herstellung der erfindungsgemäßen Verbindungen, dadurch gekennzeichnet, dass man die Komponenten a) und b) sowie gegebenenfalls weitere Komponenten kondensiert und vor, während oder nach der Kondensation die Umsetzung mit Säuregruppen-einführenden Reaktanden erfolgt.

Die Kondensation kann beispielsweise unter Verwendung von basischen oder sauren Katalysatoren oder komplett ohne Katalysatoren erfolgen.

Die Kondensationsreaktion kann in wässriger Lösung bei Temperaturen von 20°C bis 200°C im basischen oder sauren Milieu erfolgen. Die Reihenfolge der Reaktandenzugabe, sowie die Reaktionsführung haben dabei selbstverständlich Einfluss auf die Eigenschaften des resultierenden Produktes, wie zum Beispiel auf das Molekulargewicht.

Die Einführung von Sulfonsäuregruppen kann vor, während oder nach der Kondensation erfolgen beispielsweise durch
- 1): Umsetzung mit konzentrierter Schwefelsäure oder
- 2): Umsetzung mit Oleum oder
- 3): Umsetzung von Chlorsulfonsäure oder
- 4): Umsetzung mit Alkali-, Erdalkali- oder Ammoniumdisulfiten oder
- 5): Umsetzung mit Alkali-, Erdalkali- oder Ammoniumhydrogensulfiten oder
- 6): Umsetzung mit Alkali-, Erdalkali- oder Ammoniumsulfamaten oder
einer Mischung der obigen Sulfonierungsmöglichkeiten 1) bis 6).

In einer bevorzugten Ausführungsform erfolgt die Einführung von Sulfonsäuregruppen durch Reaktion mit Natriumdisulfit derart, dass Natriumdisulfit mit einem Teil der Di-Aldehyd-Komponente a) sowie der Amin- oder Amid-Komponente b) in wässrigem Milieu bei Temperaturen von 20 bis 200°C, bevorzugt bei 20 bis 150°C, besonders bevorzugt beginnend bei 20-50°C und endend bei 70 bis 140°C zur Reaktion gebracht wird. Nach Umsetzung wird optional mit weiterer Di-Aldehyd-Komponente (a) bei Temperaturen von 20 bis 200°C, bevorzugt 60 bis 200°C, besonders bevorzugt 70 bis 140°C umgesetzt.

Die Erfindung betrifft weiterhin die Verwendung der erfindungsgemäßen Verbindungen, sowie Mischungen, enthaltend die erfindungsgemäßen Verbindungen, zum Gerben von Häuten oder Fellen oder zum Nachgerben mineralisch gegerbter Leder, insbesondere chromgegerbten Leder dadurch gekennzeichnet, dass die Häute oder Felle bzw. das gegerbte Leder mit den erfindungsgemäßen Kondensationsprodukt in wässriger Flotte behandelt werden.

Ebenfalls Gegenstand der Erfindung sind Leder oder Pelze, welche mit den erfindungsgemäßen Verbindungen gegerbt oder nachgegerbt werden.

Der Einsatz von Gerb-/Nachgerbstoffen ist dem Fachmann an sich bekannt.

In einer bevorzugten Verwendung werden die erfindungsgemäßen Leder oder Pelze hergestellt, indem man in einer handelsüblichen Gerbapparatur wie Gerbfass, Mixer oder Dosamat handelsübliches Wet Blue auf einen pH-Wert von 3,8 bis 7,0, bevorzugt 4,5 bis 6,0 einstellt und anschließend in wässriger Flotte mit 2-20 % des erfindungsgemäßen Nachgerbstoffes allein oder in Kombination mit weiteren Nachgerbmitteln/Farbstoffen/Fettungsmitteln nachgerbt. Das so behandelte Leder kann betriebsüblich weiter verarbeitet werden.

Leder, welche mit dem erfindungsgemäßen Stoff gegerbt oder nachgegerbt werden, weisen neben einer Weichheit eine besondere Fülle und Festnarbigkeit, insbesondere in den Flämenbereichen auf.

Der erfindungsgemäße Stoff kann selbstverständlich auch in Verbindung mit weiteren Zusatzstoffen zur Anwendung kommen. Als solche kommen beispielsweise Neutralisationsmittel, Füllstoffe, Puffer, Dispergatoren, Entschäumer, Fette, Hydrophobiermittel, Färbereihilfsmittel oder andere Gerb- /Nachgerbstoffe in Frage.

Die Zusatzstoffe können z. B. durch gleichzeitige Zugabe ins Gerbfaß oder abgestufte Zugabe in die gleiche Flotte eingesetzt werden. Bevorzugt ist eine Mischung mit den Zusatzstoffen zu einem lagerstabilen Produkt in flüssiger oder fester Form.

Besonders bevorzugt sind hierbei Zusatzstoffe mit gut dispergierender Wirkung z. B. auf Basis von Formaldehydkondensaten aus Formaldehyd und wenigstens einer aromatischen Verbindung aus der Gruppe bestehend aus Naphthalinsulfonsäuren, Kresolsulfonsäuren, Phenolsulfonsäuren, Ditolylethersulfonsäuren, Bishydroxyphenylsulfon und Phenolen.

Als Füllstoffe können anorganische Füllstoffe wie Silikate, Zeolite oder Talkum zur Verwendung kommen, aus der Gruppe der organischen Füllstoffe kommen z. B. Stärken, modifizierte Stärken oder Ligninsulfonate zum Einsatz.

Die Erfindung betrifft weiterhin Mischungen, enthaltend
(i) wenigstens ein erfindungsgemäßes Kondensationsprodukt,
(ii) wenigstens ein Dispergiermittel, insbesondere ein solches auf Basis von Formaldehydkondensaten aus Formaldehyd und wenigstens einer aromatischen Verbindung aus der Gruppe bestehend aus Napthalinsulfonsäuren, Kresolsulfonsäuren, Phenolsulfonsäuren, Ditolylethersulfonsäuren, Bishydroxyphenylsulfon und Phenolen, und
(iii) wenigstens einem Füllstoff, insbesondere Ligninsulfonate.

Bevorzugt beträgt der Anteil der Komponente
(i) 30-80 Gew.-%, insbesondere 50-75 Gew.-%
(ii) 10-60 Gew.-%, insbesondere 15-40 Gew.-%,
(iii) 10-60 Gew.-%, insbesondere 15-40 Gew.-%,
jeweils bezogen auf die Summe der Mischungskomponenten (i) bis (iii).

Die erfindungsgemäße Mischung kann als Feststoff oder als flüssige Präparation, vorzugsweise als wässrige Lösung vorliegen. Als Feststoff liegt die Mischung vorzugsweise als Pulver oder Granulat vor, wobei die Summe von (i)-(iii), bezogen auf die Mischung vorzugsweise mehr als 90 Gew.-%, insbesondere mehr als 95 Gew.-% ausmacht.

Der Feststoffanteil der flüssigen Präparation beträgt dabei vorzugsweise 30-70 Gew.-%, wobei dieser insbesondere durch mehr als 90 Gew.-%, vorzugsweise mehr als 95 Gew.-% der Komponenten (i)-(iii) bestritten wird.

Die Erfindung betrifft weiter die Verwendung des erfindungsgemäßen Stoffes oder der erfindungsgemäßen Mischung als Hilfsmittel für die Papier- oder Textilanwendung.

Im Rahmen dieser Erfindung gelten auch alle Kombinationen der oben offenbarten allgemeinen Bereiche und der Vorzugsbereiche sowie der Vorzugsbereiche untereinander als offenbarte Vorzugsbereiche.

### Beispiele

### Beispiel 1:

1400 g Wasser werden bei 30°C vorgelegt und unter Rühren 798g Natriumdisulfit zugegeben. Zur Lösung werden 252 g Melamin und 10 g Borax zugegeben und der Ansatz auf 100°C erwärmt. Innerhalb 2 Stunden werden bei 98 - 102°C 1088 g Glutardialdehyd-Lösung, 50% zudosiert und die Reaktionsmischung 3 h nachgerührt bis ein klare Lösung entstanden ist. Diese wird am Rotationsverdampfer zur Trockene eingeengt und vermahlen.

### Beispiel 2:

Zu 1100 g Natriumbisulfit-Lösung 38 % werden beginnend bei 30°C 410 g wässriger Glutardialdehyd-Lösung 50 % zudosiert. Die Temperatur steigt hierbei bis 55°C. Nach Zugabe von 94,6 g Melamin und 22,5 g Harnstoff wird 2 h auf 95°C erwärmt, anschließend während 30 Minuten 205 g wässriger, 50 Gew.-%iger Glutardialdehyd-Lösung zudosiert und bei 94-98°C 10 h nachgerührt. Es wird bis zur Trockene eingeengt und bei 180°C sprühgetrocknet.

### Beispiel 3:

400 g Natriumdisulfit werden in 700 g Wasser gelöst und anschließend 63 g Melamin, 5 g Borax und 45 g Harnstoff zugegeben. Es wird geheizt und ab 70 °C 544 g Glutardialdehyd-Lösung 50 % zudosiert so daß 95°C nicht überschritten werden. Bei 103-108°C wird 2 h nachgerührt. Es wird bis zur Trockene eingeengt und vermahlen.

### Beispiel 4:

1000 g Wasser werden bei Raumtemperatur vorgelegt und mit 475 g Natriumdisulfit versetzt. Es folgt bei 30°C beginnend eine Zugabe von 540 g Glutardialdehyd-Lösung 25 %. Nach Zugabe von 150 g Melamin und 75 g Ethandiol wird 15 Minuten bei 55°C nachgerührt. Es wird auf 95°C erwärmt und während 30 Minuten erfolgt die Zugabe von 80 g Glyoxal und 10 g Methansulfonsäure. Bei 95-98°C wird 6 h nachgerührt. Am Rotationsverdampfer wird bis zur Trockene eingeengt und bei 100°C getrocknet.

### Beispiel 5:

180 g Phenolsulfonsäure werden bei Raumtemperatur in 1270 g Natriumbisulfit-Lösung 36,5 % vorgelegt. Es folgte bei 30°C beginnend die Zugabe von 490 g Glutardialdehyd-Lösung 50 %. Die Temperatur steigt hierbei bis 70°C. Nach Zugabe von 140 g Melamin und 60 g Phenol wird auf 95°C erwärmt und 6 h nachgerührt. Am Rotationsverdampfer wird bis zur Trockene eingeengt und bei 100°C getrocknet.

### Beispiel 6:

180 g einer gemäß Beispiel 2 erhaltene Produktlösung wird mit 110 g einer Lösung eines synthetischen Gerbereihilfsmittels auf Basis eines Kondensates aus Formaldehyd und Ditolylethersulfonsäuren versetzt ("Hilfsmittel 1"). Die Mischung wird im Sprühtrockner bei 160 °C in Pulver überführt und 70 g des so erhaltenen Produktes mit 30 g Talkum trocken vermischt.

Analog werden weitere Produkte erstellt (Einsatzmengen bezogen auf Feststoffgehalt im Fertigprodukt)

| **Nr.** | **6a** | **6b** | **6c** | **6d** | **6e** | **6f** | **6g** |
|---|---|---|---|---|---|---|---|
| **Produkt aus Beispiel** | 2 | 1 | 2 | 2 | 4 | 3 | 1 |
| Menge [%] | 40 | 50 | 50 | 30 | 60 | 70 | 65 |

| **Mischprodukt vor Trocknung** | | | | | | | |
|---|---|---|---|---|---|---|---|
| Hilfsmittel 1 | | 20 | | | | | 15 |
| Hilfsmittel 2 | 30 | | | 20 | | | |
| Nachgerbstoff 1 | | | 25 | | | | |
| Ligninsulfonat, Na-Salz | | 30 | | | | 30 | |

| **Mischprodukt nach Trocknung** | | | | | | | |
|---|---|---|---|---|---|---|---|
| Ligninsulfonat, Ca-Salz | 30 | | | 20 | | | |
| Talkum | | | | 20 | 20 | | 20 |
| Zeolit | | | | | 20 | | |
| Natriumsulfat | | | 25 | 10 | | | |

| | | | | | | | |
|---|---|---|---|---|---|---|---|
| Hilfsmittel 1: Kondensationsprodukt auf Basis von Ditolylethersulfonsäuren und Formaldehyd, Natrium-Salz, (entspricht dem Kondensationsprodukt aus dem Vergleichsbeispiel 2 der EP-A-1568788) Hilfsmittel 2: Kondensationsprodukt auf Basis von Naphthalinsulfonsäuren und Formaldehyd, Natrium-Salz; (entspricht dem Kondensationsprodukt D aus EP-A-1416058) Nachgerbstoff 1: Kondensationsprodukt auf Basis von Phenol, Phenolsulfonsäure, Harnstoff und Formaldehyd, Natrium-Salz; (entspricht dem Kondensationsprodukt E aus EP-A-1416058) | | | | | | | |

### Vergleichsbeispiel 1 : Vergleichsprodukt aus EP-A-063319 (Beispiel 1)

92 Teile einer 65 %igen wässrigen Lösung eines Kondensationsproduktes aus 34 Teilen Harnstoff, 30 Teilen Formaldehyd und 15 Teilen Melamin (Viskosität: 85 sec. Fordbecher 4 mm bei 20°C) werden in 50 Teilen Wasser mit 52 Teilen Natriumhydrogensulfit und 30 Teilen Harnstoff 2 h bei 90°C gerührt. Anschließend werden 50 Teile 30 %ige Formaldehyd-Lösung zugetropft, mit 40 Teilen Wasser verdünnt und 5 h bei 90°C gerührt.

### Vergleichsbeispiel 2: Handelsüblicher Harzgerbstoff

680 Teile Formalin (30 %ig) werden mit 96 Teilen Wasser verdünnt und bei 50°C mit 100 Teilen Natriumdisulfit versetzt. Man gibt 32 Teile Melamin zu, rührt für 15 min und erhitzt mit 69 Teilen Formalin auf 95°C. Nach 2 h Rühren bei 95°C wird mit 400 Teilen Wasser verdünnt, 120 Teile Natriumsulfat zugegeben und die Mischung durch Sprühtrocknung in einen Feststoff überführt.

### Anwendungsbeispiel 1: Nachgerbung Modellrezeptur

Wet Blue (Rind, 100 g) wird im Fass mit 100 % Wasser (Prozentangaben immer bezogen auf das Wet Blue-Gewicht), 1 % Natriumformiat und 0,8 % Natriumbicarbonat über Nacht bei 40°C bewegt. Nach Ablassen der Flotte und Spülen wird im Fass mit 100 % Wasser und 5 % des Prüfproduktes (die Prozentangabe bezieht sich auf den Feststoffgehalt) bei 40°C 2 Stunden bewegt. Schließlich werden die Leder mit 300 % Wasser und 10 % einer handelsüblichen Fettmischung 90 Minuten bei 50°C im Fass bewegt. Nach Zugabe von 2,5 % Ameisensäure (85 %ig) und weiterer Behandlung im Fass für 15 Minuten wird gespült, ausgestoßen und hängegetrocknet.

Bewertung der Leder:

| Produkt / Beispiel | 2 | 6a | 6g | Vgl. 1 | Vgl. 2 |
|---|---|---|---|---|---|
| Fülle | ++ | ++ | +++ | ++ | ++ |
| Farbe | +++ | ++ | +++ | + | ++ |
| Festnarbigkeit | +++ | +++ | ++ | + | + |
| Freier Formaldehyd | n. d. | n. d. | n. d. | 146 ppm | 115 ppm |

| | | | | | |
|---|---|---|---|---|---|
| n.d. = non detectable | | | | | |

Die erhaltenen Leder wurden gemäß der Prüfvorschrift DIN 53315 "Nachweis von freiem Formaldehyd in Leder" untersucht.

### Anwendungsbeispiel 2 : Nachgerbung für Autoleder

Rohware: Wet Blue, Rind, Falzstärke 1,2 mm, Gewicht ca 2 kg. Mengenangaben beziehen sich auf Falzgewicht.

| | | **%** | **Produkt** | | **Zeit min** | **Bemerkung** |
|---|---|---|---|---|---|---|
| **Waschen** | | 300 | Wasser 40°C | | | |
| | | | | | 15 | pH 3.6 |
| | | | | | | Flotte ab |
| **Neutralisation** | | 100 | Wasser 30°C | | | |
| | | 1.0 | Natriumformiat | | | |
| | | 2.0 | Neutralisationsgerbstoff | | 15 | |
| | | 1.0 | Natriumbicarbonat | | 10 | |
| | + | 3.0 | Synthetisches Fettungsmittel | 1:3 | 60 | pH 5.8 |
| | | | | | | Flotte ab |
| **Waschen** | | 200 | Wasser 30°C | | 10 | |
| | | | | | | Flotte ab |
| **Nachgerbung** | | 50 | Wasser 30°C | | | |
| | | 4.0 | Synthetisches Fettungsmittel | 1:3 | 20 | |
| | | 4.0 | Synthethischer Nachgerbstoff | | | |
| | | 4.0 | **Prüfprodukt** | | | |
| | | 4.0 | Vegetabilgerbstoff Tara | | 20 | |
| | | 3.0 | Farbstoff Grau | | 60 | Penetrationstest |
| | + | 50 | Wasser 60°C | | | Heizen 50 °C |
| | | 1.0 | Ameisensäure 85 % | 1:10 | 15 | |
| | | 1.0 | Ameisensäure 85 % | 1:10 | 20 | pH 3.9 |
| | | | | | | Flotte ab |
| **Fettung** | + | 150 | Wasser 60°C | 1:3 | 60 | |
| | + | 10 | Synthetisches Fettungsmittel | | 5 | |
| | + | 1.0 | Ameisensäure 85% | 1:10 | 30 | pH 3.8 |
| | | | | | | Flotte ab |
| **Waschen** | | 200 | Wasser 20°C | | 10 | |
| | | | | | | Flotte ab |

Leder auf Bock, ausrecken, naß spannen, klimatisieren, stollen, millen über Nacht.

Das mit dem erfindungsgemäßen Produkt aus Beispiel 6b erhaltene graue Leder zeichnet sich durch besondere, gleichmäßige Festnarbigkeit und feines Millbild aus. Die losnarbigen, leeren Bereiche an Hals und Flämen sind deutlich kleiner als bei einem analog mit einem Produkt gemäß Vergleichsbeispiel 2 hergestellten Leder. Bei einer Kontrollmessung gemäß DIN 53315 konnte für das erfindungsgemäße Leder kein Formaldehyd nachgewiesen werden, das Leder mit Vergleichsbeispiel 2 weist 58 ppm auf.

### Anwendungsbeispiel 3: Nachgerbung für Schuhoberleder

Rohware: Wet Blue, Rind, Falzstärke 1,4 mm; Mengenangaben beziehen sich auf Falzgewicht.

| **%** | **Produkt** | | **Zeit Min** | **Bemerkungen** |
|---|---|---|---|---|
| 200 | Wasser 40 °C | | | |
| 0,1 | Nichtionogenes Netzmittel | | | |
| 0,2 | Ameisensäure | 1:10 | 20 | pH: 3,4 |
| | | | | Ablassen |
| 100 | Wasser 35 °C | | 10 | |
| | | | | Ablassen |
| 100 | Water 35 °C | | | |
| 3.0 | Chromgerbstoff | | | |
| 2,0 | Komplexierendes Abstumpfmittel | | 90 | pH 3,6 |
| 1.0 | Natriumformiat | | | |
| 0,4 | Natriumbicarbonat | | 40 | |
| 100 | Wasser 50 °C | | | |
| | | | Über Nacht | pH 4,0 |
| | | | | Ablassen |
| 150 | Wasser 35°C | | 10 | |
| | | | | Ablassen |
| 150 | Wasser 35°C | | | |
| 1,5 | Neutralisationsgerbstoff | | | |
| 0,2 | Natriumbicarbonat | | 60 | pH 4,9 |
| | | | | Ablassen |
| 100 | Wasser 25 °C | | | |
| 2,0 | Dispergierender Polymergerbstoff | 1:4 | 5 | |
| 4,0 | Polyacrylat | 1:4 | 15 | |
| 5,0 | Synthethischer Gerbstoff | | | |
| 4,0 | Prüfprodukt | | | |
| 4,0 | Vegetabilgerbstoff Kastanie | | 10 | |
| 2,5 | Farbstoffmischung Braun | | 60 | |
| 100 | Wasser 50 °C | | | Heizen 50 °C |
| 1,3 | Ameisensäure 85 % | 1:10 | 30 | pH 3,5 |
| | | | | Ablassen |
| 150 | Wasser 50°C | | | |
| 6,0 | Weichmachender Polymergerbstoff | | | |
| 3,0 | Fettungsmittel Fischölbasis | | | |
| 0,5 | Fettungsmittel Lecitinbasis | | 60 | |
| 1,3 | Ameisensäure | | 30 | pH 3,4 |
| | | | | Ablassen |
| 150 | Wasser 60°C | | | |
| 0,3 | Farbstoffmischung Braun | | 20 | |
| 0,5 | Ameisensäure | 1:10 | 20 | |
| | | | | Ablassen |
| 200 | Wasser 50°C | | | |

Leder auf Bock, Ausrecken, Vakuumtrocknung 2 min bei 60 °C, Hängetrocknen, Stollen, Vakuumtrocknung 30 sec. bei 60 °C

Das mit dem Produkt aus Beispiel 2 erhaltene Leder zeichnet sich durch besondere Fülle und einen trockenen Griff aus. Es ist deutlich festnarbiger als ein analog ohne das erfindungsgemäße Produkt oder mit dem Produkt aus Vergleichsbeispiel 2 hergestellten Leder. Bei einer Kontrollmessung gemäß DIN 53315 ohne Prüfprodukt und mit dem erfindungsgemäßen Produkt konnte kein Formaldehyd nachgewiesen werden, mit dem Produkt aus Vergleichsbeispiel 2 wurden 44 ppm gefunden.

## Patentansprüche

1. Säuregruppen-enthaltene Kondensationsprodukte auf Basis von
a) Aldehyden, wobei der Aldehyd ausgewählt ist aus der Gruppe Di-Aldehyde aus der Gruppe der C₂-C₁₂-Di-Aldehyde und
b) wenigstens einer NH₂-Gruppen tragenden Verbindung
wobei als Säuregruppe Sulfon- und/oder Carbonsäuregruppen sowie deren Salze verstanden werden.

2. Kondensate gemäß Anspruch 1, **dadurch gekennzeichnet, dass** als Di-Aldehyde der Komponente a) aliphatische Di-Aldehyde, vorzugsweise C₂-C₈-Di-Aldehyde eingesetzt werden.

3. Kondensate gemäß wenigstens einem der vorangegangenen Ansprüche, **dadurch gekennzeichnet, dass** als Di-Aldehyde der Komponente a) eine oder mehrere Verbindungen aus der Gruppe Glyoxal, Butandialdehyd, Butendialdehyd, Glutardialdehyd, Adipaldehyd und Octandialdehyd, insbesondere Glutardialdehyd eingesetzt werden.

4. Kondensate gemäß wenigstens einem der vorangegangenen Ansprüche, **dadurch gekennzeichnet, dass** als NH₂-Gruppen enthaltene Verbindungen der Komponente b) primäre Amide und/oder Amide, insbesondere aliphatische oder aromatische C₁-C₁₀-Amine und/der -Amide, insbesondere Cyanamid, Harnstoff, Melamin, Urotropin, Guanidin, Formoguanamin, Benzoguanamin, Acetoguanamin, Caprinoguanamin, Isobutyroguanamin, Acrylamid, Benzamid, Dicyandiamid (Cyanoguanidin) oder Mischungen daraus, insbesondere aber Melamin und/oder Harnstoff eingesetzt werden.

5. Kondensate gemäß wenigstens einem der vorangegangenen Ansprüche, **dadurch gekennzeichnet, dass** als Salze der Säuregruppen Alkali-, Erdalkali- oder Ammoniumsalze, insbesondere Natrium- oder Kaliumsalze in Frage kommen.

6. Kondensate gemäß wenigstens einem der vorangegangenen Ansprüche, **dadurch gekennzeichnet, dass** als weitere Aufbaukomponente als Komponente c) ein oder mehrere aromatische oder aliphatische Alkohole eingesetzt werden.

7. Kondensate gemäß wenigstens einem der vorangegangenen Ansprüche, **dadurch gekennzeichnet, dass** als weitere Aufbaukomponente als Komponente c) ein oder mehrere Verbindungen aus der Gruppe Methanol, Ethanol, Propanol, Ethandiol, Diethanolamin, Glycerin, Triethanolamin und Phenol eingesetzt werden.

8. Verfahren zur Herstellung von Kondensaten gemäß wenigstens einem der vorangegangenen Ansprüche, **dadurch gekennzeichnet, dass** man die Komponenten a) und b) sowie gegebenenfalls weitere Komponenten kondensiert und vor, während oder nach der Kondensation die Umsetzung mit Säuregruppen-einführenden Reaktanden erfolgt.

9. Mischungen, enthaltend
(i) wenigstens ein Kondensat nach Anspruch 1,
(ii) wenigstens ein Dispergiermittel, insbesondere solche auf Basis von Kondensaten aus Formaldehyd und wenigstens einer aromatischen Verbindung aus der Gruppe bestehend aus Napthalinsulfonsäuren, Kresolsulfonsäuren, Phenolsulfonsäuren, Ditolylethersulfonsäuren, Bishydroxyphenylsulfon und Phenolen, und
(iii) wenigstens einen Füllstoff, insbesondere Ligninsulfonate.

10. Verwendung der Kondensate nach wenigstens einem der Ansprüche 1 bis 8 oder der Mischung nach Anspruch 9 zum Gerben von Häuten oder Fellen oder zum Nachgerben von mineralisch gegerbten Leder in wässriger Flotte.

11. Leder oder Pelze gegerbt oder nachgegerbt mit wenigstens einem Kondensat nach wenigstens einem der Ansprüche 1 bis 9.

12. Verwendung der Kondensate nach wenigstens einem der Ansprüche 1 bis 9 als Hilfsmittel für die Papier- oder Textilanwendung.
